# DEMANDE DE BREVET EUROPEEN

(11) **EP 3 910 537 A1**
(43) Date de publication de la demande: **17.11.2021**
(21) Numéro de dépôt: 21170525.6
(22) Date de dépôt: 26.04.2021
(51) Int. Cl.: G06K 9/00, B23C 3/00, G06K 9/62

(54) **PROCÉDÉ DE RECONNAISSANCE ET D'IDENTIFICATION DE CLÉS AUX FINS DE LEUR DUPLICATION**

(30) Priorité: 11.05.2020 FR 2004615
(71) Demandeur: SECURKEYS, 76100 Rouen (FR)
(72) Inventeur: METIVIER, Pascal, 75016 Paris (FR)
(74) Mandataire: Dupuis-Latour, Dominique

(57) **Abrégé**

Un utilisateur prend avec un équipement individuel (10) des vues recto et verso d'une clé à reproduire (12). Le fichier image est envoyé à un site distant comprenant des bases de données (20-1,20-2 ... 20-n) répertoriant tous les modèles de clés possibles. Un module d'analyse générique (18) identifie la famille, à dents ou à trous, de la clé et une pluralité de singularités génériques de cette clé. Un moteur de recherche (18) détermine le modèle de clé par interrogation des bases de données (20-1, 20-2 ... 20-n) à partir des singularités génériques déterminées. Une pluralité de modules d'analyse spécifique (26, 36), correspondant chacun à une famille de clés, identifient des singularités spécifiques de la clé et déterminent le codage de celle-ci à partir des singularités spécifiques identifiées. Le duplicata de la clé est alors réalisé (32, 42), sur la base des informations ainsi déterminées à partir des vues prises par l'utilisateur.

## Description

L'invention concerne un procédé de reconnaissance et d'identification de clés aux fins de leur duplication, ainsi qu'une architecture informatique adaptée à la mise en œuvre d'un tel procédé.

L'un des buts de l'invention est de permettre à un client utilisateur d'obtenir la duplication d'une clé qu'il a en sa possession, sans qu'il ait besoin de se rendre chez un serrurier ou dans une boutique de duplication de clés, et sans avoir à se séparer temporairement de sa clé pour la remettre ou l'envoyer à un tiers. Il peut s'agir également d'une duplication de clés de voiture pour ce qui est de leur partie mécanique.

Il s'agit de proposer à l'utilisateur de photographier sa clé au moyen d'un téléphone portable ou équipement analogue, en prenant un nombre limité de vues - typiquement deux vues seulement, du recto et du verso de la clé à reproduire - et de transmettre ces vues à un site distant qui assurera automatiquement, par analyse de ces vues et sans autre intervention de l'utilisateur, la reconnaissance du type de clé, de son fabricant, du modèle, du codage spécifique des dents ou des trous, etc. de la clé.

Une fois la clé reconnue et identifiée, le site distant proposera au client d'exécuter un duplicata de cette clé, après soumission d'une proposition de prix. Une fois le duplicata exécuté, ce dernier pourra être adressé au client par voie postale ou autre mode de remise, ou bien adressé à un tiers autorisé par le client (tiers de confiance), par exemple une société de gardiennage assurant pour le compte de ses clients un stockage sécurisé de divers duplicata de jeux de clés.

Avec certains modèles de clés, il est certes possible de commander un duplicata sans déplacement ni remise physique de la clé. Il en est ainsi des clés pour serrures de haute sécurité (portes blindées, etc.), qui sont accompagnées d'une carte de propriété portant un numéro codé et remise au client par le serrurier avec le jeu de clés au moment de la pose de la serrure. L'utilisateur détenteur de la carte pourra commander plus tard des duplicata au moyen du code inscrit sur cette carte. Mais ce mode de protection ne concerne qu'un nombre très réduit de modèles de clés, et souvent l'utilisateur ne dispose plus de la carte ou ne la retrouve pas lorsqu'il veut commander un duplicata plusieurs années après.

D'autres clés portent un numéro gravé sur la tête de la clé, qui identifie le codage spécifique des dents ou des trous de la clé et permet de réaliser un duplicata sur la base de ce numéro. Mais, ici encore, cela ne concerne pas tous les types de clés ; d'autre part l'utilisateur peut avoir entre les mains une clé de ce type particulier qui ne soit pas une clé originale (portant le numéro) mais une clé "de seconde main", c'est-à-dire une copie de la clé originale, copie dépourvue du numéro gravé.

Les US 2013/331976 A1, US 2012/243957 A1, EP 1 191 475A2 et US 2010/278438 A1 décrivent diverses techniques d'analyse et de reproduction de clés, qui toutes procèdent par des comparaisons brutes entre des photographies de la clé à reproduire et une multitude de rubriques d'une base de données répertoriant indifféremment tous les modèles et codages possibles.

L'un des buts de l'invention est de proposer un système universel de reproduction de clés, applicable à tout modèle de clé, même sans carte de propriété, même sans numéro gravé, et qui ne soit pas nécessairement une clé d'un modèle simple tel que les clés plates à dents dont le profil de denture est aisé et rapide à reproduire avec une machine de recopie de clés dotée d'un palpeur de profil.

Mais une base de données cataloguant toutes ces formes avec leurs variantes et codages possibles représenterait un volume d'informations considérable et nécessiterait un moteur de recherche extrêmement puissant pour retrouver par comparaison brute des images le modèle particulier de clé à identifier.

Cette problématique est rendue particulièrement complexe sur le marché européen par la très grande diversité des fabricants, types, modèles, etc., de clés.

En effet, à la différence de l'Amérique du Nord où l'on ne trouve tout au plus que quelques dizaines de formes de clés différentes, le marché européen se caractérise par une très grande variété de formes possibles, correspondant typiquement à plusieurs centaines de modèles différents. L'un des problèmes de l'invention est ainsi de trouver une technique d'analyse de clés permettant de réaliser une économie importante des moyens informatiques à mettre en œuvre au niveau du site central, et de réduire le temps de recherche nécessaire pour reconnaitre le modèle de la clé à reproduire dont la photographie soumise par l'utilisateur, et déterminer le codage individualisant le modèle de clé ainsi reconnu, de manière à identifier de façon unique cette clé particulière détenue par l'utilisateur.

Le processus doit en outre pouvoir être mis en œuvre de façon universelle et indifférenciée pour la quasi-totalité des modèles de clés susceptibles d'être rencontrés en pratique, en dépit de la très grande diversité de ces modèles.

Essentiellement, l'idée de base de l'invention consiste, au lieu de procéder à des comparaisons brutes entre des photographies de la clé à reproduire et une multitude de rubriques d'une base de données répertoriant tous les modèles possibles, de procéder en deux temps, avec i) une phase préalable de recherche d'indices (ci-après "singularités génériques") par analyse des images de la clé à reproduire (typiquement les deux vues recto et verso), pour ii) dans un second temps permettre à un moteur de recherche de s'orienter de façon beaucoup plus efficace et rapide dans la base de données pour y reconnaître le modèle particulier de clé correspondant à la clé à reproduire.

En effet, la phase préalable de reconnaissance et de recherche de ces "singularités génériques" permet au moteur de recherche de s'orienter ensuite de façon beaucoup plus efficace et rapide dans la base de données pour y déterminer le codage individualisant la clé, les singularités génériques déjà identifiées constituant alors des descripteurs pour le moteur de recherche de cette base de données.

Plus précisément, pour atteindre les buts exposés ci-dessus, l'invention propose un procédé comprenant les étapes spécifiques énoncées à la revendication 1.

Les sous-revendications 2 à 8 visent des modes de mise en œuvre subsidiaires avantageux de ce procédé.

L'invention a également pour objet une architecture informatique spécifiquement adaptée à la mise en œuvre de ce procédé, comprenant les éléments énoncés aux revendications 9 et 10.

On va maintenant décrire un exemple de mise en œuvre de l'invention, en référence au dessin unique annexé.

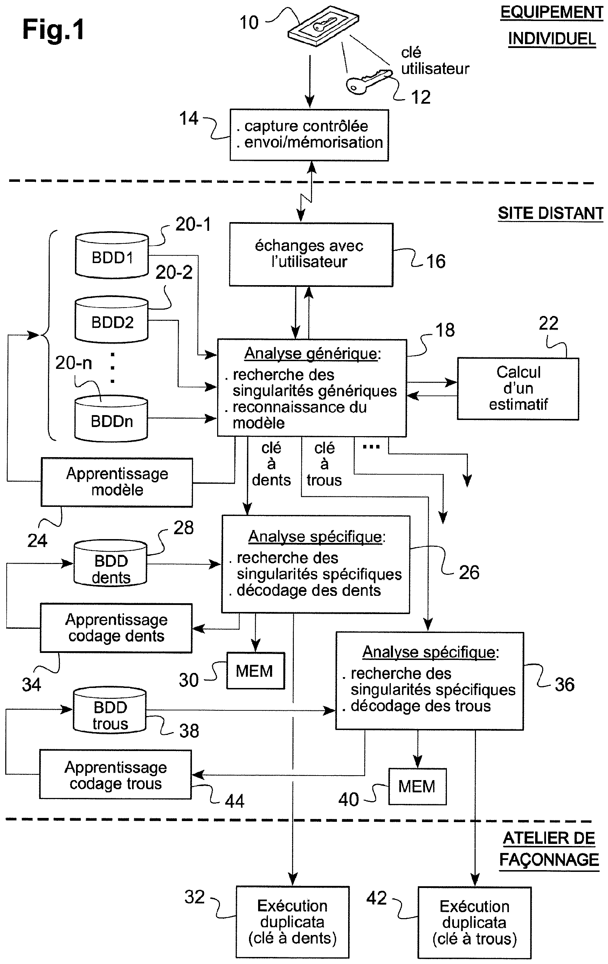

La Figure 1 est un synoptique d'un exemple d'architecture informatique permettant la mise en œuvre d'un procédé selon l'invention de reconnaissance et d'identification de clés aux fins de leur duplication.

Par "reconnaissance", on entendra la détermination d'un modèle de clé, propre à tel ou tel fabricant ou bien standardisé.

La majorité de ces modèles se répartissent en deux familles principales, à savoir les clés à dents et les clés à trous, et dans la suite de la description on envisagera seulement le cas de ces deux grandes familles pour la simplicité de l'exposé. Mais l'invention peut être tout aussi bien extrapolée à la reproduction d'autres familles de clés telles que les clés à gorge ou les clés à pompe, ou encore des clés plus spécifiques telles que les clés de voiture dont la partie mécanique comporte par exemple un sillon en zigzag gravé sur une tige plate.

Par "identification", on entendra la détermination, pour un modèle donné de clés, du codage particulier qui individualise la clé de façon unique entre toutes les clés du même modèle : forme des gorges dans l'ébauche de clé, profil de denture pour une clé à dents, position et profondeur des trous pour une clé à trous, etc.

Le procédé de l'invention met essentiellement en œuvre des moyens logiciels ; pour la clarté de l'exposé, les divers traitements appliqués seront décomposés et schématisés par un certain nombre de modules ou blocs fonctionnels distincts et interconnectés, mais cette représentation n'a toutefois qu'un caractère purement illustratif, les fonctions ou circuits décrits comprenant généralement des éléments communs qui sont en pratique globalement exécutées par un même logiciel.

Le procédé de l'invention comporte une phase initiale, réalisée au niveau d'un équipement individuel 10.

Dans le cas le plus simple, cet équipement individuel peut être un téléphone portable de type *smartphone,* qui permet de photographier une clé 12 en possession de l'utilisateur, désignée par la suite "clé d'origine" - ce terme désignant la clé à reproduire proprement dite, quand bien même elle serait une copie faite à partir d'une clé antérieure (clé de seconde génération).

L'utilisateur est invité à prendre des clichés de la clé 12, comprenant au moins deux clichés, à savoir du recto et du verso de la clé, celle-ci étant posée à plat sur un fond neutre.

Pour cela, il est aidé par un module logiciel 14 de capture contrôlée d'images, intégré à une application qu'il aura préalablement téléchargée, avec un guidage pas-à-pas de la prise de vue et, à chaque étape, vérification que l'image capturée répond à certains critères tels que : angle de prise de vue (évalué par l'accéléromètre du smartphone) assurant le respect des proportions de la clé sur l'image, absence de flou, exposition correcte, présence effective d'une clé sur l'image, taille minimale de la clé sur l'image et présence de la totalité de la silhouette de la clé, etc.

Ces deux vues (ou plus) de la clé validées par le module 14 constituent un fichier image qui est mémorisé, pour envoi immédiat ou ultérieur au site distant.

Il est possible d'envisager d'autres sources de fichier image que la capture directe par un smartphone : le fichier image peut par exemple être un fichier conservé par l'utilisateur en mémoire sur son ordinateur, ou de façon dématérialisée sur un serveur distant (stockage *cloud*). L'utilisateur peut en particulier conserver, par précaution, les fichiers image de toutes ses clés, de manière à pouvoir faire réaliser rapidement un duplicata le cas échéant, par exemple en cas de perte de l'une de ces clés.

Le fichier image est reçu par le site distant via un module d'interfaçage 16 qui authentifie préalablement l'utilisateur, assure avec lui les échanges et protocoles de requêtes/réponses, etc. par des techniques en elles-mêmes connues de l'homme du métier. Le module d'interfaçage 16 peut également, en variante ou en complément, assurer certaines vérifications de conformité des vues du fichier image, du même type que celles qui ont été évoquées plus haut au niveau de l'équipement individuel pour le module de capture contrôlée 14.

De façon caractéristique de l'invention, le site distant procède alors à une première analyse (ci-après "analyse générique") des vues du fichier image afin, d'une part, de déterminer la famille - clé à dents ou clé à trous - à laquelle appartient la clé d'origine photographie et, d'autre part, d'extraire un certain nombre de singularités (ci-après "singularités génériques") identifiables sur les vues de la clé et qui serviront ensuite de descripteurs appliqués en entrée de moteurs de recherche de bases de données afin de reconnaître le modèle particulier de clé correspondant à la clé d'origine.

Par rapport à une recherche réalisée par des comparaisons brutes d'images (techniques de *pattern matching* entre les vues de la clé d'origine et des images de clés mémorisées dans les bases de données), cette manière particulière de procéder selon l'invention est bien plus performante, aussi bien en termes de rapidité qu'en termes de ressources informatiques devant être mises à disposition.

L'analyse générique préalable opérée par le module 18 peut notamment porter sur les caractéristiques suivantes (cette liste n'étant aucunement limitative) :
taille et forme de la tête de la clé,
ratio entre la taille de la tête et la taille de la tige de la clé,
profil de la tête et/ou de la tige de la clé,
forme et dimension d'un trou formé dans la tête de la clé et destinée à recevoir un anneau de porte-clés.

La recherche du modèle de clef est opérée par de techniques connues de l'homme du métier, à base d'extraction de points caractéristiques (*feature recognition*), qui ne seront pas décrites plus en détail.

Les singularités génériques ainsi déterminées sont ensuite appliquées en tant que descripteurs à des moteurs de recherche de diverses bases de données 20-1, 20-2, ... 20-n dont chacune est constituée d'un catalogue de modèles de clés, ces catalogues pouvant avoir des origines diverses, notamment (et de façon non limitative) :
bases de données des fabricants,
bases de données de logos,
bases de données empiriques évolutives, enrichies au fur et à mesure des cas particuliers douteux rencontrés lors de la mise en œuvre du procédé.

La recherche du modèle de clef est opérée par de techniques connues de l'homme du métier, à base de corrélation entre points caractéristiques (*feature matching*), qui ne seront pas décrites plus en détail.

Si les singularités génériques ne permettent pas de reconnaître avec certitude le modèle de la clé d'origine photographiée, le module 18 demande à l'utilisateur d'effectuer une levée de doute parmi une pluralité de propositions de modèles retournées par les moteurs de recherche et pour lesquels subsiste encore une ambiguïté sur la détermination. Ces propositions sont transmises à l'utilisateur et affichées sur l'écran de son téléphone portable 10 en lui demandant de sélectionner le modèle qui, selon lui, correspond de plus près à la clé d'origine.

Une fois la réponse reçue, un module 24 d'apprentissage viendra enrichir la base de données empirique par des nouvelles données de singularités génériques, validées de façon univoque par l'utilisateur. Cet apprentissage peut être réalisé au moyen d'un traitement de classification supervisée, selon des techniques en elles mêmes connues.

Une fois le modèle de la clé d'origine déterminé avec certitude, un module 22 calcule de façon automatique le coût de la réalisation matérielle d'un duplicata de cette clé, établit un devis personnalisé en fonction de l'utilisateur, et envoie à ce dernier un message qui s'affiche sur son téléphone portable 10.

Si l'utilisateur accepte le devis, alors la suite du processus pourra être engagée, de manière à déterminer tous les autres paramètres nécessaires à l'exécution d'un duplicata exact de la clé d'origine dont le modèle a été préalablement reconnu.

Compte tenu de leurs spécificités propres, les deux familles de clés, à dents et à trous, font de préférence l'objet de traitements distincts. Du point de vue logiciel, ces traitements peuvent bien entendu partager des bibliothèques de fonctions communes, de nombreuses tâches à exécuter étant similaires dans l'un ou l'autre cas, seuls les paramétrages de ces tâches étant différents pour l'une et l'autre famille de clés.

Pour les clés qui sont des clés à dents, un module 26 opère une seconde analyse (ci-après "analyse spécifique") des vues du fichier image de la clé d'origine. Cette analyse sera propre au modèle particulier de clé qui avait été identifié par le module 18 d'analyse générique et de reconnaissance du modèle de clé.

L'analyse spécifique est, tout comme l'analyse générique précédente, opérée par des techniques connues de l'homme du métier, notamment des techniques de reconnaissance de forme et d'extraction de points caractéristiques (ci-après "singularités spécifiques"), qui ne seront pas décrites plus en détail.

Les singularités spécifiques peuvent être notamment (et de façon non limitative) :
la position et la profondeur des dents,
un codage alphanumérique gravé sur la clé,
un logo ou une inscription gravée sur la clé.

Les singularités spécifiques qui ont été reconnues sont analysées par le module 26 afin de procéder à l'identification de la clé d'origine, c'est-à-dire déterminer le codage individuel propre à cette clé, qui la différencie de toutes les autres clés du même modèle.

La reconnaissance des singularités spécifiques par le module 26 est opérée à partir d'une base de données 28 cataloguant tous les modes de codage possibles de tous les modèles de clés à dents susceptibles d'être rencontrés.

Le module 26 délivre comme résultat de l'analyse spécifique un fichier décrivant de façon univoque la clé d'origine (ci-après "fichier d'identification"), incluant i) le modèle particulier de la clé d'origine, qui avait été déterminé lors de la phase d'analyse générique (module 18) et ii) le codage propre de la clé d'origine pour ce modèle, codage qui a été déterminé par l'analyse spécifique (module 26) que l'on vient de décrire. Le fichier d'identification est transmis à un atelier de façonnage qui peut alors procéder à l'exécution du duplicata de la clé (bloc 32) à partir de tous les paramètres nécessaires à cet effet, contenus dans le fichier d'identification délivré par le site distant.

Le duplicata ainsi réalisé pourra être expédié ou remis à l'utilisateur par tout moyen approprié ou, en variante, à un tiers de confiance tel qu'une société de gardiennage assurant la conservation sécurisée de doubles de clés pour le compte de ses clients, par exemple pour pouvoir leur remettre en urgence en cas de perte par le client.

Cette manière de procéder, avec fabrication directe du double par le prestataire, évite à l'utilisateur d'avoir à se dessaisir d'un exemplaire de ses clés pour mise en dépôt chez le tiers de confiance.

Par ailleurs, il peut être prévu un module 34 d'apprentissage permettant d'enrichir et d'améliorer la base de données 28, par exemple sur la manière de localiser et de mesurer chaque dent du profil de denture de la manière la plus fiable et la plus précise possibles.

En ce qui concerne les clés à trous, celles-ci sont identifiées et reproduites en suivant un processus semblable à celui des clés à dents, par des modules référencés 36 à 44 qui sont homologues des modules 26 à 34, avec les mêmes fonctions mises en œuvre mais adaptées aux spécificités des clés à trous.

En particulier, pour des clés à trous, les singularités spécifiques peuvent être notamment (et de manière non limitative) :
position et dimension des trous,
codage alphanumérique gravé sur la clé,
logo ou inscription gravée sur la clé.

Un avantage subsidiaire de l'invention, quelle que soit la famille de clés considérée, est la possibilité de corriger une clé usée ou imparfaite, ce qui est souvent le cas des clés de seconde génération, réalisées de façon plus ou moins approximative au moyen d'une machine de recopie à palpeur.

En effet, pour l'invention il ne s'agit pas de reproduire par exemple la silhouette d'un profil de denture existant, mais de décoder au mieux la clé d'origine en fonction des singularités spécifiques du modèle auquel elle appartient, pour réaliser ensuite une clé strictement conforme aux paramètres de codage du fabricant, paramètres qui ont été identifiés à partir des informations contenues dans les bases de données utilisées par le procédé, notamment les bases de données répertoriant des informations directement issues des fabricants.

## Revendications

1. Un procédé mis en œuvre par informatique de reconnaissance et d'identification de clés aux fins de leur duplication, **caractérisé en ce qu'**il comprend les étapes suivantes :
- au niveau d'un équipement individuel (10) à disposition d'un utilisateur :
a) la prise de vue (14) d'un exemplaire d'une clé d'origine (12) à reproduire, la clé d'origine étant une clé i) d'une famille donnée parmi une pluralité de familles comprenant au moins les clés à dents et les clés à trous, ii) d'un modèle donné parmi une pluralité de modèles donnés au sein d'une même famille, et iii) portant un codage propre identifiant individuellement la clé d'origine ;
b) la production d'un fichier image comprenant au moins deux vues, recto et verso, de la clé d'origine ; et
c) l'envoi du fichier image à un site distant ;
- au niveau du site distant :
d) une première analyse, qui est une analyse générique préalable (18) des vues de la clé d'origine pour identifier i) la famille à laquelle appartient la clé d'origine, et ii) une pluralité de singularités génériques prédéfinies de la clé d'origine, les singularités génériques étant propres à un modèle d'une famille de clé ;
e) l'application des singularités génériques identifiées à l'étape d) à un moteur de recherche d'au moins une base de données (20-1, 20-2 ... 20-n), pour déterminer le modèle de clé auquel appartient la clé d'origine,
lesdites singularités génériques étant appliquées au moteur de recherche en tant que descripteur de recherche ;
f) une fois déterminé le modèle de clé auquel appartient la clé d'origine, une seconde analyse, distincte de la première analyse, qui est une analyse spécifique (26, 36), propre au modèle de clé identifié aux étapes précédentes d) et e), des vues de la clé d'origine pour identifier une pluralité de singularités spécifiques de la clé d'origine, les singularités spécifiques étant propres au codage d'un modèle de clé,
l'analyse spécifique étant l'une d'entre une pluralité d'analyses spécifiques différentes, chacune propre à un modèle de clé différent ; et
g) la détermination (26, 36) du codage de la clé d'origine à partir des singularités spécifiques identifiées à l'étape f).

2. Le procédé de la revendication 1, comprenant en outre, au niveau de l'équipement individuel, et/ou du site distant avant l'étape d) d'analyse générique, une étape préalable de :
- validation (14, 16) de la conformité des vues du fichier d'image reçu à l'égard de critères prédéterminés nécessaires à l'exécution d'analyses génériques et spécifiques conformes.

3. Le procédé de la revendication 1, comprenant en outre, après l'étape e) :
- par le site distant, le calcul automatisé (22) d'un estimatif de duplication de la clé d'origine et la génération d'un message incluant l'estimatif calculé ;
- l'envoi, du site distant à l'équipement individuel à disposition de l'utilisateur, du message incluant l'estimatif calculé ; et
- sur l'équipement individuel, l'affichage de l'estimatif.

4. Le procédé de la revendication 1, comprenant en outre, après l'étape g) de détermination du codage de la clé d'origine :
- la production d'un fichier (30, 40) d'identification de la clé incluant le modèle de clé déterminé à l'étape e) et le codage déterminé à l'étape g) ; et
- l'envoi du fichier d'identification à une unité de duplication pour exécution (32, 42) d'au moins un duplicata de la clé d'origine.

5. Le procédé de la revendication 4, comprenant en outre, après exécution (32, 42) du duplicata de la clé d'origine :
- l'envoi matériel du duplicata à un tiers de confiance pour gardiennage du duplicata ; ou
- l'envoi matériel du duplicata à l'utilisateur.

6. Le procédé de la revendication 1, dans lequel, si à l'étape e) le moteur de recherche renvoie une pluralité de résultats de modèle de clé possibles, le procédé comprend alors les étapes additionnelles suivantes :
- par le site distant, envoi à l'équipement individuel d'une requête de sélection d'un modèle parmi lesdits modèles de clé possibles ;
- sur l'équipement individuel, affichage à l'utilisateur d'une interface de présentation et de sélection desdits modèles de clé possibles, et envoi au site distant d'un message en réponse indiquant le modèle à sélectionner ; et
- au niveau du site distant, réception du message en réponse et poursuite des étapes f) et g) sur la base du modèle sélectionné par l'utilisateur.

7. Le procédé de la revendication 1, dans lequel lesdites singularités génériques propres à un modèle d'une famille de clé comprennent une ou plusieurs singularités parmi : taille et forme de la tête de la clé, ratio entre taille de tête et taille de tige de la clé, profil de la clé, forme et dimension d'un trou de la clé destiné à recevoir un anneau de porte-clefs.

8. Le procédé de la revendication 1, dans lequel lesdites singularités spécifiques propres au codage d'un modèle de clé comprennent une ou plusieurs singularités parmi : position et profondeur des dents pour une clé à dents, position et dimension des trous pour une clé à trous, codage alphanumérique gravé sur la clé, logo ou inscription gravés sur la clé.

9. Une architecture informatique pour la mise en œuvre d'un procédé selon l'une des revendications 1 à 8 de reconnaissance et d'identification de clés aux fins de leur duplication, **caractérisé en ce qu'**elle comprend :
- un équipement individuel (10) à disposition d'un utilisateur, apte à réaliser les étapes respectives de a) prise de vue d'au moins deux vues, recto et verso, d'un exemplaire de la clé d'origine (12) à reproduire, b) production du fichier image, et c) envoi du fichier image à un site distant ; et
- un site distant comprenant :
• un module de communication (16) pour l'échange d'informations avec l'équipement individuel ;
• au moins une base de données (20-1, 20-2 ... 20-n) répertoriant tous les modèles de clés possibles d'une pluralité de familles de clés comprenant au moins les clés à dents et les clés à trous ;
• un module d'analyse générique préalable (18) des vues de la clé d'origine apte à exécuter l'étape d) d'identification de la famille à laquelle appartient la clé d'origine, et de la pluralité de singularités génériques de la clé d'origine ;
• un moteur de recherche (18) apte à déterminer le modèle de clé auquel appartient la clé d'origine par interrogation desdites au moins une base de données (20-1, 20-2 ... 20-n) à partir des singularités génériques déterminées par le module d'analyse générique,
lesdites singularités génériques étant appliquées au moteur de recherche en tant que descripteur de recherche ; et
• une pluralité de modules d'analyse spécifique (26, 36) des vues de la clé d'origine, correspondant respectivement à la pluralité de familles de clés, aptes chacun à exécuter les étapes f) d'identification des singularités spécifiques de la clé d'origine et g) de détermination du codage de la clé d'origine à partir des singularités spécifiques identifiées,
chaque analyse spécifique de la pluralité de modules d'analyse spécifique (26, 36) étant propre à un modèle de clé différent.

10. L'architecture informatique de la revendication 9, dans laquelle le site distant comprend au moins une base de données (20-1, 20-2 ... 20-n, 28, 34) interfacée au module d'analyse générique (18) et/ ou aux modules d'analyse spécifique (26, 36) des vues de la clé de manière à pouvoir être enrichie de nouvelles données de singularités génériques et/ou spécifiques identifiées par lesdits modules et soumises à un traitement de classification supervisée (24, 34).
